# EUROPÄISCHE PATENTSCHRIFT

(11) **EP 2 661 545 B1**
(45) Veröffentlichungstag und Bekanntmachung des Hinweises auf die Patenterteilung: **05.11.2014**
(21) Anmeldenummer: 11805873.4
(22) Anmeldetag: 27.12.2011
(51) Int. Cl.: F01N 3/08, F01N 3/20, F04B 17/03, F04B 23/04

(54) **FÖRDERVORRICHTUNG ZUR VERSORGUNG EINES ABGASNACHBEHANDLUNGSSYSTEMS EINER BRENNKRAFTMASCHINE MIT EINEM REDUKTIONSMITTEL SOWIE ENTSPRECHENDES VERFAHREN**
DELIVERY DEVICE FOR PROVIDING AN EXHAUST GAS PURIFICATION SYSTEM OF AN INTERNAL COMBUSTION ENGINE WITH A REDUCING AGENT AND CORRESPONDING METHOD
DISPOSITIF DE DISTRIBUTION POUR ALIMENTER UN SYSTEM DE PURIFICATION DE GAZ D'ÉCHAPPEMENT D'UN MOTEUR À COMBUSTION INTERNE AVEC UN AGENT REDUCTEUR ET PROCÉDÉ ASSOCIÉ

(30) Priorität: 04.01.2011 DE 102011002425
(43) Veröffentlichungstag der Anmeldung: 13.11.2013
(73) Patentinhaber: Robert Bosch GmbH, 70442 Stuttgart (DE)
(72) Erfinder: ULRICH, Markus, 73635 Rudersberg (DE); WALETZEK, Christoph, 70327 Stuttgart (DE)
(86) Internationale Anmeldenummer: PCT/EP2011/074062
(87) Internationale Veröffentlichungsnummer: WO 2012/093051

(56) Entgegenhaltungen:
- WO-A1-2004/107534
- DE-A1- 19 704 248
- DE-A1-102008 000 932

## Beschreibung

### Stand der Technik

Bei Kraftfahrzeugen mit Brennkraftmaschinen müssen aufgrund sich stetig verschärfender Abgasgrenzwerte Luftschadstoffe, wie zum Beispiel Stickoxide (NOx), im Abgasstrom immer weiter vermindert werden. Ein bekanntes Verfahren, das in diesem Zusammenhang zur Anwendung kommt, ist die katalytische Reduktion (s.g. "Selective Catalytic Reduction", "SCR"-Verfahren). Hierbei wird ein Reduktionsmittel mit einer Pumpe aus einem Tank bis zu einem Dosiermodul im Bereich des Abgasstrangs gefördert. Das zum Eindüsen des Reduktionsmittels notwendige Dosiermodul ist innerhalb des Abgasstrangs im Allgemeinen vor dem Katalysator, in dem die Reduktion der Stickoxide erfolgt, angeordnet. Als Reduktionsmittel wird üblicherweise eine 32,5%-ige Harnstoff-Wasser-Lösung (s.g. "AdBlue^{®}") eingesetzt. Zur Förderung des Reduktionsmittels werden vielfach Membranpumpen eingesetzt, die in der Regel eine bevorzugte Förderrichtung haben.

Der Antrieb der Membranpumpen erfolgt vielfach über einen Elektromotor mit einem Exzenter, der über eine Pleuelstange mit der Pumpenmembran verbunden ist. Wird der Exzenter mithilfe des Elektromotors in Rotation versetzt, so wird die Pumpenmembran periodisch von der Pleuelstange angehoben und abgesenkt, wodurch das Reduktionsmittel aus dem Vorratstank angesaugt und bis zum Dosiermodul gefördert wird. Eine der Membranpumpe nachgeschaltete Blende bzw. Drossel verhindert einen Druckanstieg im System, wenn das Dosiermodul geschlossen ist oder nur eine sehr geringe Menge des Reduktionsmittels in den Abgasstrang abgibt. Zu diesem Zweck wird die nicht benötigte Fördermenge von der Blende über eine zusätzliche Rücklaufleitung in den Vorratstank zurück geleitet. Das Abgasnachbehandlungssystem verfügt ferner über eine aufwändige Steuer- und/oder Regeleinrichtung zur Kontrolle aller Systemabläufe sowie eine Vielzahl von Sensoren und Aktuatoren, die untereinander über ein bidirektionales Bussystem miteinander verschaltet sind.

Die Harnstoff-Wasser-Lösung gefriert unterhalb von -11 °C. Um die notwendige Eisdruckfestigkeit nach dem Abstellen der Brennkraftmaschine sicherzustellen, muss das Reduktionsmittel aus allen Bereichen, die längerfristig einer Temperatur von -11 °C oder weniger ausgesetzt sind, möglichst vollständig zurückgesaugt werden. Um den Rücksaugvorgang mittels der üblicherweise eingesetzten Membranpumpen realisieren zu können, wird in der Regel ein separates 4/2-Wegeventil eingesetzt.

Im normalen Förderbetrieb, insbesondere während des normalen Betriebs der Brennkraftmaschine, befindet sich das 4/2-Wegeventil im unbestromten Ruhezustand, so dass mithilfe der Membranpumpe das Reduktionsmittel aus dem Tank heraus gefördert und über das 4/2-Wegeventil bis zum Dosiermodul gelangen kann. Während des Zurücksaugens des Reduktionsmittels aus dem Abgasnachbehandlungssystem kann die Förderrichtung der Membranpumpe unverändert beibehalten werden. Lediglich das 4/2-Wegeventil wird angesteuert. Im normalen Förderbetrieb fließt das Reduktionsmittel gegenläufig durch zwei parallele Kanäle im 4/2-Wegeventil, während im Rücksaugbetrieb das Reduktionsmittel gegenläufig durch zwei weitere, sich überkreuzende Kanäle im 4/2-Wegeventil strömt.

Derartige Mehrwegeventile bedingen jedoch einen konstruktiv aufwändigen Aufbau und sind daher auch kostenintensiv in der Herstellung. Darüber hinaus sind solche Ventile anfällig für Leckagen, verschleißanfällig und wartungsintensiv.

Eine gattungsgemässe Fördervorrichtung ist aus DE10 2008 000 932 A bekannt.

Aufgabe der Erfindung ist es daher, eine Fördervorrichtung für Abgasnachbehandlungssysteme, insbesondere nach dem so genannten "SCR"-Verfahren zu schaffen, die im Vergleich zu vorbekannten Lösungen konstruktiv einfacher aufgebaut ist, die eine geringe Verschleißneigung sowie eine hohe Ausfallsicherheit aufweist und die darüber hinaus wartungsarm ist.

### Offenbarung der Erfindung

Es wird eine Fördervorrichtung zur Versorgung eines Abgasnachbehandlungssystems einer Brennkraftmaschine mit einem Reduktionsmittel, insbesondere mit einer Harnstoff-Wasser-Lösung, zur Reduktion von Stickoxiden im Abgasstrom der Brennkraftmaschine, offenbart, die einen Motor zum Antrieb von zwei Pumpen aufweist.

Erfindungsgemäß ist die erste Pumpe über eine erste Kupplung und die zweite Pumpe über eine zweite Kupplung mit dem Motor verbunden.

Die Kupplungen sind vorzugsweise als Freilaufkupplungen ausgebildet, können alternativ aber auch als schaltbare (lösbare) Kupplungen ausgeführt sein. Hierdurch ist es auf einfache Art und Weise möglich, wahlweise die erste Pumpe (Rücksaugpumpe) oder die zweite Pumpe (Förderpumpe) mit dem Antriebsmotor zu verbinden und so von einem s.g. normalen "Förderzustand", während die Brennkraftmaschine läuft, in einen s.g. "Rücksaugzustand", insbesondere nach einer längeren Stillstandszeit der Brennkraftmaschine, umzuschalten. Durch das im Idealfall vollständige Zurücksaugen des Reduktionsmittels aus dem Abgasnachbehandlungssystem zur Vorbereitung einer längeren Stillstandszeit der Brennkraftmaschine, wird die notwendige Eisdruckfestigkeit bei Umgebungstemperaturen von -11°C oder darunter erreicht.

In der bevorzugten Ausführungsform der Fördervorrichtung sind die Kupplungen gegenläufig wirkende Freilaufkupplungen.

Hierdurch kann durch eine einfache Drehrichtungsumkehr des Motors vom "Förderzustand" in den "Rücksaugzustand" und umgekehrt umgeschaltet werden. Beim Stillstand des Motors wird keine der beiden Pumpen - unabhängig vom Schaltzustand der Kupplungen - angetrieben, so dass sich die Fördervorrichtung im so genannten "Ruhezustand" befindet. Jede der gegenläufig verschalteten Pumpen wird daher unabhängig vom Systemzustand ("Förderzustand"/"Rücksaugzustand") stets nur in ihrer Förderrichtung betrieben.

Eine weitere vorteilhafte Ausgestaltung der Fördervorrichtung sieht vor, dass ein Dosiermodul des Abgasnachbehandlungssystems über ein Wechselventil mit einer Druckleitung der zweiten Pumpe und mit einer Saugleitung der ersten Pumpe verbunden ist. Das Dosiermodul dient zur Einspritzung einer exakt festgelegten Menge des Reduktionsmittels in ein Abgasrohr mit einem Katalysator zur Reduktion der Stickoxide. Im Katalysator erfolgt die eigentliche selektive chemische Reduktion der Stickoxide im Abgasstrom der Brennkraftmaschine zu Wasser (H₂O) und Stickstoff (N₂). Das Wechselventil erlaubt eine wirkungsvolle hydraulische Trennung zwischen den beiden Pumpen, wobei die Umschaltung des Wechselventils selbsttätig, allein aufgrund der an einem Druckanschluss bzw. an einem Sauganschluss des Wechselventils herrschenden Druckverhältnisse erfolgt. Die Anbindung der Filtereinheit sowie des diesem nachgeschalteten Dosiermoduls an das Wechselventil erfolgt über einen, in beiden Richtungen vom Reduktionsmittel durchströmten (bidirektionalen), dritten Anschluss des Wechselventils.

In einer bevorzugten Ausführungsform sind eine Saugleitung der zweiten Pumpe und eine Druckleitung der ersten Pumpe mit einem Vorratsbehälter für das Reduktionsmittel verbunden.

Infolge dieser Leitungsanordnung kann das Reduktionsmittel mithilfe der zweiten Pumpe im normalen Betrieb der Brennkraftmaschine aus dem Vorratsbehälter angesaugt und über das Wechselventil mit Überdruck bis zum Dosiermodul weiter gefördert werden. Daneben erlaubt diese Leitungsführung zur Einleitung einer längeren Stillstandszeit der Brennkraftmaschine das Zurücksaugen des Reduktionsmittels aus dem Dosiermodul über das Wechselventil mithilfe der ersten Pumpe bis zurück in den Vorratsbehälter.

Eine weitere vorteilhafte Ausführungsform der Fördervorrichtung sieht vor, dass die beiden Pumpen als Membranpumpen ausgebildet sind.

Die Membranpumpen ermöglichen einen konstruktiv einfachen Aufbau der Fördervorrichtung. Darüber hinaus verfügen Membranpumpen über eine gute Korrosionsbeständigkeit, da der Förderraum vom Antriebsbereich durch die Membran vollkommen getrennt ist. Durch die Verwendung von Membranpumpen wird die Betriebssicherheit der Fördervorrichtung für das im Allgemeinen chemisch aggressive Reduktionsmittel erhöht und zugleich der Wartungsaufwand erheblich verringert. Membranpumpen ermöglichen im Regelfall einen praktisch wartungsfreien Betrieb über die gesamte Lebensdauer eines Kraftfahrzeugs hinweg.

Nach einer weiteren vorteilhaften Ausgestaltung ist vorgesehen, dass zum Antrieb der Pumpen ein Elektromotor, insbesondere ein Außenläufermotor, eingesetzt wird.

Die Ausführung des Motors als Elektromotor weist zunächst den Vorteil einer leichten Regel- und Steuerbarkeit auf. Die Verwendung eines Außenläufermotors hat darüber hinaus den Vorteil, dass durch das große Trägheitsmoment des sich um den Stator drehenden Rotors eine Vergleichmäßigung des Förderstroms möglich ist.

Gemäß einer weiteren vorteilhaften Fortbildung der Fördervorrichtung ist mindestens eine Rückflussdrossel vorgesehen.

Insbesondere bei der Verwendung eines Außenläufermotors, dessen sich drehender Rotor in der Regel ein hohes Trägheitsmoment aufweist, bleibt der Motor im "Förderzustand" ständig eingeschaltet, um einen möglichst gleichmäßigen Förderstrom zu gewährleisten und die Hochlaufzeiten des Motors zu minimieren. Darüber hinaus ermöglicht ein permanent eingeschalteter Motor einen gleichmäßigen Förderstrom, wodurch eine zuverlässige und kontinuierliche Versorgung des Dosiermoduls mit dem Reduktionsmittel sichergestellt ist. Der Dauerbetrieb des Motors und der zugehörigen zweiten Pumpe im "Förderzustand" kann jedoch zu einer unerwünschten Druckerhöhung im Bereich der Druckleitung zwischen der zweiten Pumpe, dem Wechselventil sowie dem Dosiermodul führen, wenn vom Dosiermodul zu wenig oder gar kein Reduktionsmittel abgegeben wird. Um einen solchen Druckanstieg zu vermeiden, kann bevorzugt in der Druckleitung zwischen der zweiten Pumpe und dem Wechselventil eine Rückflussdrossel bzw. eine Rückflussblende vorgesehen sein, die den vom Dosiermodul nicht benötigten Reduktionsmittelüberschuss über eine zusätzliche Rückflussleitung in den Vorratsbehälter zurückleitet.

In einer alternativen Ausführungsform kann die Rückflussdrossel integraler Bestandteil des Wechselventils sein. Im Allgemeinen wird eine Drossel bzw. eine Blende mit einer zylindrischen Bohrung mit einer geringen Querschnittsfläche technisch realisiert.

Darüber hinaus wird ein Verfahren, insbesondere zum Betrieb einer derartigen Fördervorrichtung, zur Versorgung eines Abgasnachbehandlungssystems einer Brennkraftmaschine mit einem Reduktionsmittel, insbesondere mit einer Harnstoff-Wasser-Lösung, zur Reduktion von Stickoxiden im Abgasstrom der Brennkraftmaschine offenbart, die einen Motor zum Antrieb von zwei Pumpen aufweist.

Verfahrensgemäß wird durch das Umkehren der Drehrichtung des Motors zwischen einem "Förderzustand" und einem "Rücksaugzustand" umgeschaltet, wobei das Reduktionsmittel im Förderzustand mittels der zweiten Pumpe ausgehend von einem Vorratsbehälter für das Reduktionsmittel über ein Wechselventil bis zu einem Dosiermodul gefördert wird und im "Rücksaugzustand" das Reduktionsmittel mittels der ersten Pumpe ausgehend vom Dosiermodul über das Wechselventil zurück in den Vorratsbehälter gesaugt wird.

Das Verfahren erlaubt durch einfaches Ändern der Drehrichtung des Motors einen schnellen Wechsel zwischen dem "Förderzustand", in dem das Dosiermodul des Abgasnachbehandlungssystems mit dem Reduktionsmittel versorgt wird, und dem "Rücksaugzustand", in dem das im Abgasnachbehandlungssystem enthaltene Reduktionsmittel nahezu vollständig in den Vorratsbehälter zurückgeführt wird, um bei längeren Stillstandszeiten die notwendige Eisdruckfestigkeit zu erreichen. Nach dem Abschalten des Motors befindet sich das System in einem "Ruhezustand", in dem keinerlei Förderung des Reduktionsmittels erfolgt.

### Kurze Beschreibung der Zeichnungen

Anhand der Zeichnungen soll die Erfindung nachstehend eingehender beschrieben werden.

Es zeigen:
- Figur 1: eine schematische Darstellung zur Erläuterung des grundlegenden Funktionsprinzips der Fördervorrichtung;
- Figur 2: eine Prinzipdarstellung des Antriebsmotors mit zwei Freilaufkupplungen sowie den zugehörigen zwei Pumpen;
- Figur 3: einen Querschnitt durch das Wechselventil, und
- Figur 4: eine perspektivische Ansicht des Schließorgans des Wechselventils.

### Ausführungsformen

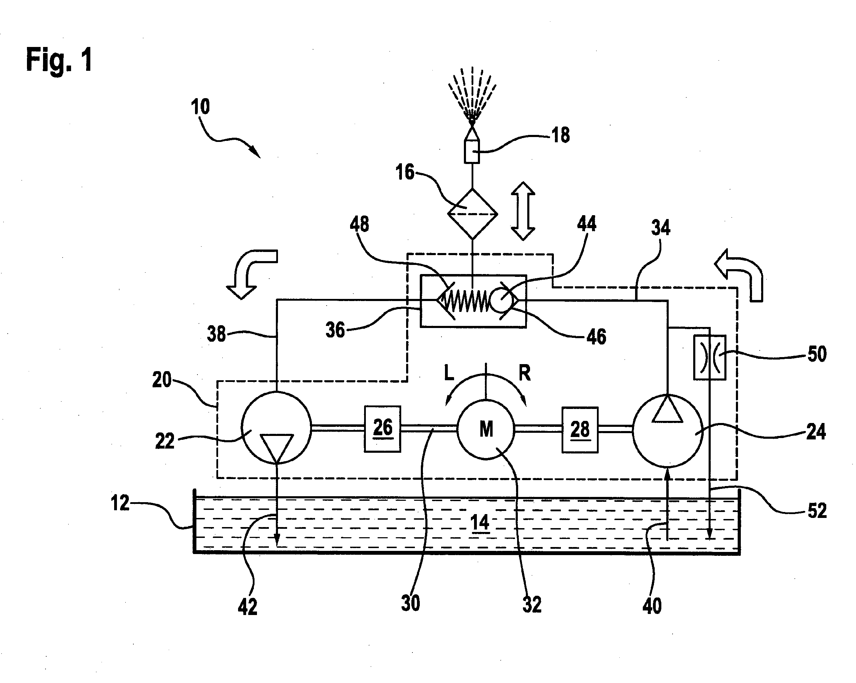

Die Figur 1 zeigt eine schematische Darstellung zur Erläuterung des grundlegenden Funktionsprinzips der Fördervorrichtung für ein Abgasnachbehandlungssystem, das nach dem so genannten "SCR"-Verfahren arbeitet.

Das Abgasnachbehandlungssystem 10 umfasst unter anderem einen Vorratsbehälter 12 für das Reduktionsmittel 14, mindestens eine Filtereinheit 16 sowie ein Dosiermodul 18. Der Abgasstrang der Brennkraftmaschine, der zur katalytischen Reduktion innerhalb des Abgasstrangs notwendige Katalysator, eine zur Kontrolle aller Abläufe innerhalb des Abgasnachbehandlungssystems 10 erforderliche Steuer- und/oder Regeleinrichtung sowie eine Vielzahl von Sensoren und Aktuatoren, die mit der Steuer- und/oder Regeleinrichtung über ein bidirektionales Bussystem miteinander kommunizieren, sind der besseren Übersicht halber in der Figur 1 nicht dargestellt.

Die grundsätzlichen Strömungsrichtungen des Reduktionsmittels 14 innerhalb des Abgasnachbehandlungssystems 10 sind durch weiße Pfeile, die nicht mit Bezugsziffern versehen sind, veranschaulicht. Eine erfindungsgemäß ausgebildete Fördervorrichtung 20 zur Versorgung des Abgasnachbehandlungssystems 10 mit dem Reduktionsmittel 14 umfasst unter anderem eine erste Pumpe 22 (Rücksaugpumpe) und eine zweite Pumpe 24 (Förderpumpe). Die Pumpen 22, 24 sind mechanisch jeweils über die Freilaufkupplungen 26, 28 mit einer Motorwelle 30 eines (Antriebs-)Motors 32 verbunden. Der Motor 32 ist in einer bevorzugten Ausführungsform als elektrischer Außenläufermotor ausgebildet. Die (durchgehende) Motorwelle 30 erlaubt den gleichzeitigen Antrieb der beiden Freilaufkupplungen 26, 28, die erfindungsgemäß entgegengesetzt wirkend ausgestaltet sind.

Dies bedeutet, dass nur die zweite Pumpe 24 angetrieben wird, wenn sich der Motor 32 beispielsweise rechts ("R") herum dreht, während sich die erste Freilaufkupplung 26 bei dieser Drehrichtung im Freilauf befindet, und demzufolge die erste Pumpe 22 stillsteht. Wird die Drehrichtung des Motors 32 umgekehrt, so dass sich dieser nunmehr linksherum ("L") dreht, so befindet sich hingegen die zweite Freilaufkupplung 28 im Freilauf. Dies hat zur Folge, dass die zweite Pumpe 24 stillsteht und nunmehr die erste Pumpe 22 über die erste Freilaufkupplung 26, die sich bei der Drehrichtung ("L") im Eingriff befindet, angetrieben wird. Somit erlauben die beiden gegensinnig wirkenden Freilaufkupplungen 26, 28 einen abwechselnden (alternierenden) Betrieb der Pumpen 22,24, jeweils in Abhängigkeit von der Drehrichtung des Motors 32 bzw. der Motorwelle 30.

Eine Druckleitung 34 der zweiten Pumpe 24 ist mit einem Wechselventil 36 verbunden, das sich in der Darstellung der Figur 1 in der unbelasteten Ruhestellung befindet. Entsprechend ist eine Saugleitung 38 der ersten Pumpe 22 gleichfalls mit dem Wechselventil 36 verbunden. Das Wechselventil 36 steht über nicht bezeichnete Leitungen mit der Filtereinheit 16 sowie dem Dosiermodul 18 des Abgasnachbehandlungssystems 10 in hydraulischer Verbindung. Als Leitungen werden im Zusammenhang mit dieser Beschreibung sowohl Rohrleitungen als auch flexible Schlauchleitungen unter Einschluss von Panzerschläuchen verstanden. Die Förderrichtungen der beiden, bevorzugt als Membranpumpen ausgestalteten Pumpen 22, 24, sind entgegengesetzt gerichtet ausgebildet. Demzufolge saugt die zweite Pumpe 24 das Reduktionsmittel 14 stets über eine Saugleitung 40 aus dem Vorratsbehälter an, während die erste Förderpumpe 22 das Reduktionsmittel 14 immer über eine Druckleitung 42 zurück in den Vorratsbehälter 14 fördert.

Nachfolgend soll ein exemplarischer Verfahrensablauf beim Betrieb der Fördervorrichtung 20 sowie damit einhergehend der weitere Aufbau der Fördervorrichtung 20 detailliert erläutert werden:

Bei laufender oder kurz zuvor gestarteter Brennkraftmaschine wird das Reduktionsmittel 14 ausgehend vom Vorratsbehälter 12 von der zweiten Pumpe 24 angesaugt und gelangt über die Druckleitung 34 bis in das Wechselventil 36 (s.g. "Förderzustand"). Aufgrund des solchermaßen aufgebauten Förderdrucks hebt sich ein hier schematisch als Kugel dargestelltes Schließorgan 44 entgegen der von der nicht bezeichneten Feder aufgebauten Federkraft vom rechten Ventilsitz 46 des Wechselventils 36 ab und wird-entgegen deren Federkraft - gegen den linken Ventilsitz 48 gedrückt. Hierdurch kann das Reduktionsmittel 14 durch das Wechselventil 36 hindurch strömen und gelangt über die Filtereinheit bis zum Dosiermodul 18. Der sich rechts herum ("R") drehende Motor 32 treibt hierbei über die Motorwelle 30 und die zweite Freilaufkupplung 28 die zweite Pumpe 24 an. Die Drehzahl- und Drehrichtungskontrolle des Motors 32 erfolgt über die eingangs erwähnte Steuer- und Regeleinrichtung.

Als Motor 32 kommt bevorzugt ein Elektromotor, der insbesondere als ein s.g. Außenläufer ausgestaltet ist, zum Einsatz. Die Verwendung eines Elektromotors gewährleistet eine einfache Steuer- und/oder Regelbarkeit. Da sich bei einem Außenläufer der Rotor konstruktionsbedingt um den Stator dreht, kann das hierdurch bedingte höhere Trägheitsmoment des Motors 32 in vorteilhafter Weise insbesondere zur Vergleichmäßigung der Förderströme der Pumpen 22, 24 genutzt werden. Aufgrund des hohen Trägheitsmoments des Motors 32 ist es jedoch von Vorteil, den Motor 32 sowohl im "Förderzustand" als auch im "Rücksaugzustand" des Reduktionsmittels 14 möglichst durchgehend laufen zu lassen, um längere Hochlaufzeiten bis zum Erreichen einer Motorsolldrehzahl zu vermeiden. Nach der vollständigen Beendigung des Rücksaugvorgangs kann der Motor 32 abgeschaltet werden. Infolge des im Regelfall ständig laufenden Motors 32 ergibt sich zudem eine besonders gleichmäßige Versorgung des Dosiermoduls 18 mit dem Reduktionsmittel 14.

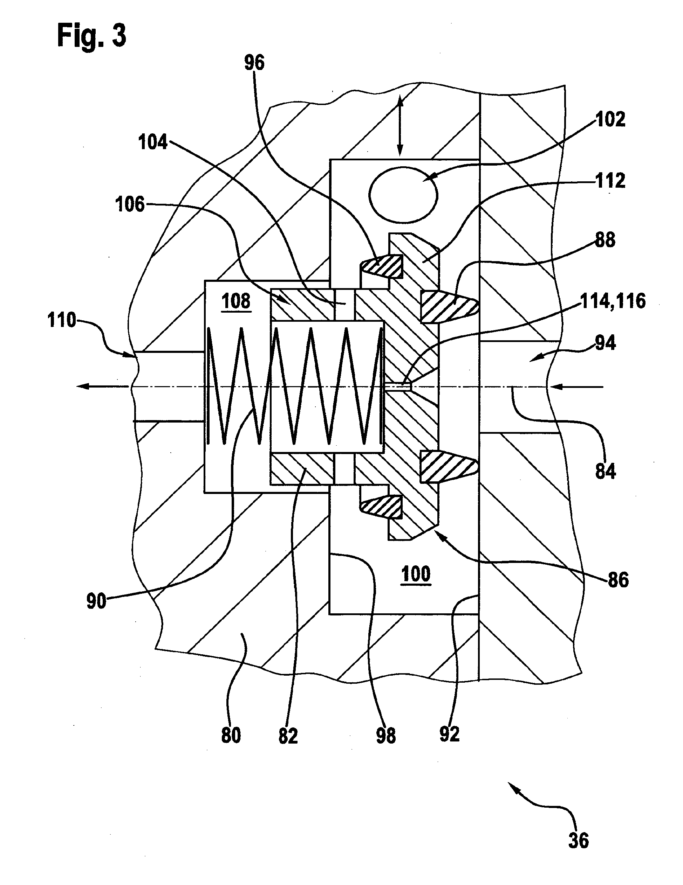

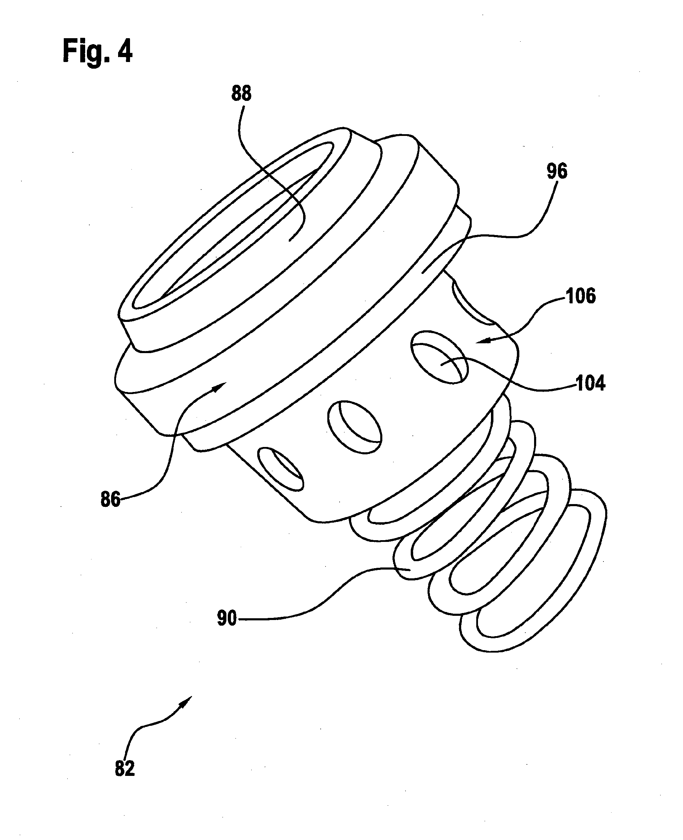

Insbesondere im "Förderzustand" kann es hierbei jedoch zu einer unerwünschten Druckerhöhung im Bereich der Druckleitung 34, dem Wechselventil 36, der nachgeschalteten Filtereinheit 16 und/oder dem Dosiermodul 18 kommen. Um dies zu verhindern, ist die Fördervorrichtung 20 in der gezeigten Ausführungsform mit einer Rückflussdrossel 50 bzw. einer Rückflussblende ausgestattet. Die Rückflussdrossel 50 ist hier an die Druckleitung 34 angeschlossen. Überschüssiges Reduktionsmittel 14, das im Dosiermodul 18 nicht benötigt wird, kann dann über die Rückflussdrossel 50 und eine dieser nachgeschaltete Rückflussleitung 52 in den Vorratsbehälter 12 zurück gelangen. Hierdurch kann die unerwünschte Druckerhöhung verhindert werden. Alternativ ist es möglich (vgl. insb. die Figuren 3,4) die Rückflussdrossel 50 bzw. die Rückflussblende als integralen Bestandteil des Wechselventils 36 auszubilden, wodurch sich die Anzahl der Leitungsverbindungen, der Dichtstellen sowie der Systemkomponenten verringern lässt. Zur Vorbereitung einer längeren Stillstandszeit der Brennkraftmaschine wird das Reduktionsmittel 14 in den Vorratsbehälter 12 zurückgesaugt. Für diesen Rücksaugprozess wird die Drehrichtung des Motors 32 von rechts ("R") auf links ("L") umgekehrt und hierdurch der so genannte "Rücksaugzustand" eingeleitet. Infolge der Drehrichtungsumkehr befindet sich die zweite Freilaufkupplung 28 im Freilaufzustand, so dass die zweite Pumpe 24 stillsteht. Demgegenüber wird die erste Pumpe 22 mittels der sich bei dieser Drehrichtung im Eingriff befindlichen ersten Freilaufkupplung 26 in Bewegung gesetzt. Hierdurch wird das Reduktionsmittel 14 ausgehend vom Dosiermodul 18 über die Filtereinheit 16 und das Wechselventil 36 über die Saugleitung 38 von der ersten Pumpe 22 angesaugt und mittels der Druckleitung 42 in den Vorratsbehälter 12 zurück befördert. Dieser "Rücksaugzustand" wird solange aufrechterhalten, bis das Reduktionsmittel 14 im Idealfall vollständig aus dem Abgasnachbehandlungssystem 10 zurückgesaugt ist und somit die notwendige Eisdruckfestigkeit hergestellt ist. Nachdem der Rücksaugvorgang beendet ist, kann der Motor 32 abgeschaltet werden, wodurch beide Pumpen 22, 24 zum Stillstand kommen und sich die Fördervorrichtung 20 im "Ruhezustand" befindet.

Im "Rücksaugzustand" wird das Schließorgan 44 des Wechselventils 36 aufgrund der Wirkung der nicht bezeichneten Druckfeder fest gegen den rechten Ventilsitz 46 gepresst, wobei zugleich der linke Ventilsitz 48 freigegeben wird, so dass das Reduktionsmittel 14 von der ersten Pumpe 22 unter Überwindung eines nur geringen Widerstandes angesaugt werden kann. Das Wechselventil 36 gewährleistet somit eine effektive hydraulische Trennung der beiden Pumpen 22, 24 bzw. der hiermit verbundenen Förderzweige in den beiden Hauptzuständen der Fördervorrichtung 20 in Gestalt des "Förderzustandes" bzw. des "Rücksaugzustandes".

Das Wechselventil 36 schaltet selbsttätig, da ein von der zweiten Pumpe 24 in der Druckleitung 34 aufgebauter Druck von bis zu 5,0 bar im "Förderzustand" in der Druckleitung 34 deutlich höher ist als ein von der ersten Pumpe 22 im Bereich der Saugleitung 38 hervorgerufener Saugunterdruck von etwa 0,5 bar. Demzufolge spricht das Wechselventil 36 allein aufgrund der jeweiligen Druckverhältnisse im Bereich der Druckleitung 34 und der Saugleitung 38 an.

Soll die Brennkraftmaschine wieder angelassen werden, so wird erneut der "Förderzustand" ausgehend vom "Ruhezustand" eingeleitet, indem der Motor 32 mit der Drehrichtung rechts "R" anläuft, so dass die zweite Förderpumpe 24 das Reduktionsmittel 14 aus dem Vorratsbehälter 12 bis zum Dosiermodul 18 fördert. Der zyklische Wechsel zwischen dem "Förderzustand", dem "Rücksaugzustand" und dem "Ruhezustand" kann beliebig oft durchlaufen werden.

Anstelle der beiden Freilaufkupplungen 26, 28 in der bevorzugten Ausführungsform können auch nicht dargestellte, zum Beispiel elektromagnetisch oder auf andere Weise schaltbare Kupplungen zum Einsatz kommen, die von der Steuer- und/oder Regeleinrichtung kontrolliert angesprochen werden. In einer solchen Konstellation ist es möglich, beide Pumpen 22, 24 auch zeitgleich fördern zu lassen, wenn das Dosiermodul 18 zu wenig Reduktionsmittel 14 abnimmt, derart, dass das überschüssige Reduktionsmittel 14 unverzüglich mittels der ersten Pumpe 22 zurück in den Vorratsbehälter 12 gefördert wird ("Kreislaufförderung"). Hierdurch kann ein Druckanstieg bei laufendem Motor 32 vermieden werden. Hierdurch kann unter Umständen die Rückflussdrossel 50 bzw. die Rückflussleitung 52 überflüssig werden. Auch das Wechselventil 36 kann in einer solchen Ausführungsform gegebenenfalls entbehrlich sein, wenn die beiden Pumpen 22, 24 im Stillstand hinreichend beidseitig druckfest bzw. durchströmungssicher sind, so dass diese im Stillstand selbst als geschlossenes "Ventil" wirken. Demzufolge kann es erforderlich sein, die Pumpen 22, 24 mit einem anderen Pumpentyp als der hier bevorzugt Verwendung findenden Membranpumpe zu bilden.

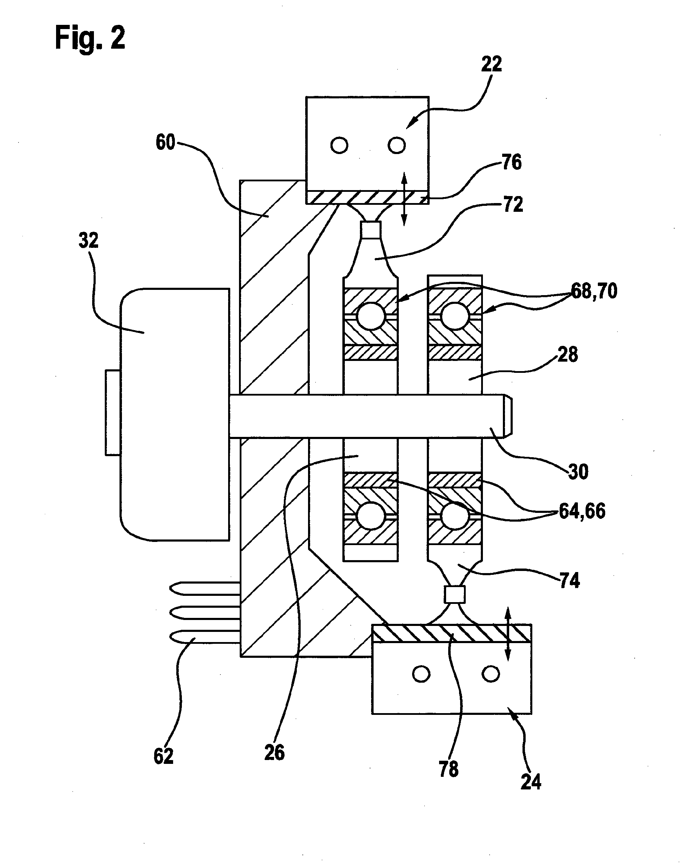

Die Figur 2 illustriert eine Schnittdarstellung eines möglichen Ausführungsbeispiels des Motors mit zwei Freilaufkupplungen und zugehörigen (Membran-)pumpen.

Der bevorzugt als Außenläufer ausgebildete Motor 32 ist an einem Gehäuse 60 angeflanscht. Die Stromversorgung des Motors 32 erfolgt über eine Steckverbindung 62 bzw. einen Steckverbinder. Die erste und die zweite Freilaufkupplung 26, 28 sind mit der Motorwelle 32 fest verbunden und werden von dieser angetrieben. Die Freilaufkupplungen 26, 28 sind mit zwei Exzentern 64, 66 verbunden, auf denen jeweils ein Kugellager 68, 70 aufgesetzt ist. Auf den Kugellagern 68, 70 sind zwei Pleuel 72, 74 drehbar aufgenommen, an denen jeweils eine Pumpenmembran 76, 78 angelenkt ist.

Durch die beiden Exzenter 64, 66 und die Pleuel 72, 74 wird die Rotationsbewegung der Motorwelle 30 in eine Linearbewegung transformiert, die durch die Pleuel 72, 74 auf die Membranen 76, 78 der Pumpen 22, 24 übertragen wird. Hierdurch vollziehen die Membranen 76, 78 eine periodische Auf- und Abwärtsbewegung, parallel zu den beiden weißen, nicht bezeichneten Pfeilen, und fördern das Reduktionsmittel - wie vorstehend im Rahmen der Beschreibung der Figur 1 näher erläutert wurde - durch die Fördervorrichtung 20 hindurch. Aufgrund der gegenläufigen Wirkung der beiden Freilaufkupplungen 26, 28 ist - in Abhängigkeit von der Drehrichtung des Motors 32-jeweils nur diejenige der beiden Pumpen 22, 24 im Förderbetrieb, deren Freilaufkupplung 26, 28 im Eingriff ist. Etwaig für den Förderbetrieb der Pumpen 22, 24 noch notwendige Rückschlagventile sind in der Figur 2 nicht dargestellt.

Die Figur 3 illustriert einen detaillierteren Querschnitt durch eine Ausführungsform des Wechselventils 36 in einer unbelasteten "Ruhestellung".

Die prinzipiellen Strömungsverhältnisse des Reduktionsmittels durch das Wechselventil 36 werden wiederum durch die nicht bezeichneten, drei weißen Pfeile veranschaulicht. Das Wechselventil 36 umfasst unter anderem ein Gehäuse 80 in dem ein näherungsweise topfförmiges Schließorgan 82 parallel zu einer Vertikallängsachse 84 federnd verschiebbar aufgenommen ist. Das Schließorgan 82 verfügt über einen umlaufenden Vorsprung 86 mit einer ersten Dichtung 88 (Dichtlippe), die aufgrund der Wirkung einer Druckfeder 90 gegen eine rechte Gehäusewand 92 als Dichtfläche gepresst wird. Hierdurch ist ein rechter Druckanschluss 94 des Wechselventils 36 abgedichtet, der im Regelfall mit der Druckleitung 34 der zweiten Pumpe 24 verbunden ist (vgl. Figur 1).

Steigt nun der Druck des Reduktionsmittels im Bereich des Druckanschlusses 94 aufgrund einer Fördertätigkeit der zweiten Pumpe 24 soweit an, dass die Federkraft der Druckfeder 90 überwunden wird, so verschiebt sich das Schließorgan 82 soweit parallel zur Ventillängsachse 84 nach links, bis eine zweite Dichtung 96 (Dichtlippe) an einer linken Gehäusewand 98 als Dichtfläche anliegt. Die erste Dichtung 88 befindet sich an einer nicht bezeichneten Vorderseite des Vorsprungs 86 bzw. des Schließorgans 82, während sich die zweite Dichtung 96 auf einer nicht bezeichneten Rückseite des Vorsprungs 86 befindet.

In dieser "Öffnungsstellung" des Schließorgans 82 kann das Reduktionsmittel ausgehend von dem Druckanschluss 94 durch eine große, näherungsweise zylindrische Kammer 100 innerhalb des Gehäuses 80 bis zu einem bidirektionalen Anschluss 102 strömen, der im Allgemeinen mit der Filtereinheit 16 bzw. dem nachgeschalteten Dosiermodul 18 verbunden ist. Um die ordnungsgemäße Funktion des Wechselventils 36 zu gewährleisten, sollte die Druckfeder 90 eine so hohe Federkraft aufbauen, dass das Verschieben des Schließorgans 82 nach links frühestens ab einem Druck von 1,5 bar im Bereich des Druckanschlusses 94 erfolgt.

Stellt die Pumpe 24 ihre Fördertätigkeit ein, so wird das Schließorgan 82, nach einer ausreichenden Druckabsenkung, aufgrund der Federkraft der Druckfeder 90 wiederum so weit nach rechts gedrückt, bis die Dichtung 88 an der rechten Gehäusewand 92 als Dichtsitz anliegt und die in der Figur 3 gezeigte "Ruhestellung" wieder erreicht ist.

Im "Rücksaugzustand" befindet sich das Schließorgan 82 in der in Figur 3 gezeigten "Ruhestellung", wobei das Reduktionsmittel von oben durch den (bidirektionalen) Anschluss 102 in die große Kammer 100 einströmen kann. Von dort aus fließt das Reduktionsmittel über eine Vielzahl von Rücksaugbohrungen - von denen lediglich eine Rücksaugbohrung 104 bezeichnet ist - in einen hohlzylindrischen Schaft 106 des Schließorgans 82. Von dort strömt das Reduktionsmittel in eine kleinere, zylindrische Kammer 108 des Gehäuses 80 ein, die in einen Sauganschluss 110 einmündet. Der Sauganschluss 110 ist im Allgemeinen mit der ersten Pumpe 22 verbunden, die zur Rückförderung des Reduktionsmittels in den Vorratsbehälter dient (vgl. Figur 1).

In der gezeigten Ausführungsform der Figur 3 übernimmt das Wechselventil 36 darüber hinaus auch die Funktion einer Rückflussdrossel sowie einer Rückflussleitung (vgl. Figur 1) in der Fördervorrichtung, die hierdurch entfallen können.

Zu diesem Zweck ist in einem Boden 112 des Schließorgans 82 eine Blendenöffnung 114 mit geringer Querschnittsfläche eingebracht, die hydraulisch gesehen eine Rückflussdrossel bzw. Rückflussblende darstellt. Durch die mit einer konisch angesenkten, im Übrigen zylindrischen Bohrung gebildete Blendenöffnung 114 kann überschüssige Reduktionsflüssigkeit, die im Dosiermodul z.B. aufgrund besonderer Betriebszustände der Brennkraftmaschine nicht abgefordert wird, vom Druckanschluss 94 über den Sauganschluss 110 durch die erste Pumpe zurück in den Vorratsbehälter 12 gelangen. Hierdurch wird ein übermäßiger Druckanstieg im System vermieden. Die beiden Dichtungen 88,96 sind aus einem hinreichend gegen Chemikalien, insbesondere das Reduktionsmittel ("AdBlue^{®}), resistenten Elastomer, wie zum Beispiel aus einem EPDM (Ethylen-Propylen-Dien-Monomer) hergestellt. Das Schließorgan 82 bzw. der Vorsprung 86 können grundsätzlich mit einer Metalllegierung oder mit einem Kunststoffmaterial hergestellt werden, solange die notwendige Beständigkeit gegenüber dem Reduktionsmittel gegeben ist. In einer bevorzugten Ausführungsform wird jedoch das Schließorgan 82 mit einem thermoplastischen oder einem duroplastischen Kunststoffmaterial ("TP"/"DP") hergestellt, wobei das duroplastische Kunststoffmaterial im Fall der in Figur 3 mit integrierten Drosselfunktion bevorzugt ist, da dieses gegen über dem in der Blendenöffnung 114 verstärkt auftretenden "Strömungsabrieb" widerstandsfähiger ist. Die Dichtungen 88,96 können beispielsweise im s.g. "2K"-Spritzgussverfahren ("Zwei-Komponenten"-Spritzgussverfahren) oder im Wege des s.g. "Compression-Molding-Verfahrens" integral zum Schließorgan 82 ausgebildet werden.

Die Figur 4 zeigt eine vergrößerte perspektivische Ansicht des Schließorgans 82 aus Figur 3.

In den hülsenartigen Schaft 106 des Schließorgans 82 ist eine Vielzahl von Rücksaugbohrungen gleichmäßig zueinander beabstandet umfangsseitig eingebracht, von denen eine Rücksaugbohrung die Bezugsziffer 104 trägt. Die Druckfeder 90 ist in den Schaft 106 eingesteckt und wird von diesem radial geführt. Oberhalb und unterhalb des umlaufenden Vorsprungs 86 sind die erste und die zweite Dichtung 88,96 angeordnet. Für den Fall, dass das Schließorgan 82 mit einem Kunststoffmaterial gebildet ist, können die beiden Dichtungen 88,96 zum Beispiel im 2-Komponenten-Spritzgussverfahren (s.g. "2K"-Spritzgussverfahren) oder im s.g. "Compression-Molding-Verfahren" integral (einstückig) zum Korpus des Schließorgans 82 hergestellt werden.

Die erfindungsgemäße Fördervorrichtung für ein Abgasnachbehandlungssystem eines Kraftfahrzeugs mit zwei Pumpen und einem Antriebsmotor, die in der bevorzugten Ausführungsform über gegenläufige Freilaufkupplungen jeweils abwechselnd von dem Antriebsmotor angetrieben werden, erlaubt eine zuverlässige und gleichmäßige Versorgung eines Dosiermoduls des Abgasnachbehandlungssystems mit dem zur katalytischen Abgasreinigung notwendigen Reduktionsmittel.

Darüber hinaus ermöglicht die Fördervorrichtung im Vergleich zu vorbekannten Lösungen mit einem 4/2-Wegeventil einen zuverlässigen und dennoch wartungsarmen Betrieb des Abgasnachbehandlungssystems, wobei durch den optimierten Rücksaugprozess zudem die notwendige Eisdruckfestigkeit bei tiefen Einsatztemperaturen des Kraftfahrzeugs erreicht wird.

## Patentansprüche

1. Fördervorrichtung (20) zur Versorgung eines Abgasnachbehandlungssystems (10) einer Brennkraftmaschine mit einem Reduktionsmittel (14), insbesondere mit einer Harnstoff-Wasser-Lösung, zur Reduktion von Stickoxiden im Abgasstrom der Brennkraftmaschine, mit einem Motor (32) zum Antrieb von zwei Pumpen (22, 24), **dadurch gekennzeichnet, dass** die erste Pumpe (22) über eine erste Kupplung und die zweite Pumpe (24) über eine zweite Kupplung mit dem Motor verbunden ist.

2. Fördervorrichtung (20) nach Anspruch 1, wobei die Kupplungen gegenläufig wirkende Freilaufkupplungen (26, 28) sind.

3. Fördervorrichtung (20) nach Anspruch 1 oder 2, wobei ein Dosiermodul (18) des Abgasnachbehandlungssystems (10) über ein Wechselventil (36) mit einer Druckleitung (34) der zweiten Pumpe (24) und mit einer Saugleitung (38) der ersten Pumpe (22) verbunden ist.

4. Fördervorrichtung (20) nach einem der Ansprüche 1 bis 3, wobei eine Saugleitung (40) der zweiten Pumpe (24) und eine Druckleitung (42) der ersten Pumpe (22) mit einem Vorratsbehälter (12) für das Reduktionsmittel (14) verbunden sind.

5. Fördervorrichtung (20) nach einem der Ansprüche 1 bis 4, wobei die Pumpen (22, 24) bevorzugt Membranpumpen sind.

6. Fördervorrichtung (20) nach einem der Ansprüche 1 bis 5, wobei der Motor (32) bevorzugt ein Elektromotor, insbesondere ein Außenläufermotor, ist.

7. Fördervorrichtung (20) nach einem der Ansprüche 1 bis 6, wobei mindestens eine Rückflussdrossel (50, 116) vorgesehen ist.

8. Fördervorrichtung (20) nach Anspruch 7, wobei die Rückflussdrossel (50) zwischen der zweiten Pumpe (24) und dem Wechselventil (36) angeordnet ist und mit dem Vorratsbehälter (12) über eine Rückflussleitung (52) verbunden ist.

9. Fördervorrichtung (20) nach Anspruch 7, wobei die Rückflussdrossel (116) in das Wechselventil (36) integriert ist und mit dem Vorratsbehälter (12) in Verbindung steht.

10. Verfahren zum Betrieb einer Fördervorrichtung, insbesondere einer Fördervorrichtung (20) nach einem der Ansprüche 1 bis 9, zur Versorgung eines Abgasnachbehandlungssystems (10) einer Brennkraftmaschine mit einem Reduktionsmittel (14), insbesondere mit einer Harnstoff-Wasser-Lösung, zur Reduktion von Stickoxiden im Abgasstrom der Brennkraftmaschine, mit einem Motor (32) zum Antrieb von zwei Pumpen (22, 24), **dadurch gekennzeichnet dass**, durch das Umkehren der Drehrichtung des Motors (32) zwischen einem Förderzustand und einem Rücksaugzustand umgeschaltet wird, wobei das Reduktionsmittel (14) im Förderzustand mittels der zweiten Pumpe (24) ausgehend von einem Vorratsbehälter (12) für das Reduktionsmittel (14) über ein Wechselventil (36) bis zu einem Dosiermodul (18) gefördert wird und im Rücksaugzustand das Reduktionsmittel (14) mittels der ersten Pumpe (22) ausgehend vom Dosiermodul (18) über das Wechselventil (36) zurück in den Vorratsbehälter (12) gesaugt wird.

## Claims

1. Pumping device (20) for supplying an exhaust gas aftertreament system (10) of an internal combustion engine with a reductant (14), in particular with an aqueous urea solution, in order to reduce nitrogen oxides in the exhaust gas flow of the internal combustion engine, having a motor (32) for driving two pumps (22, 24), **characterized in that** the first pump (22) is connected to the motor by means of a first coupling, and the second pump (24) is connected to the motor by means of a second coupling.

2. Pumping device (20) according to Claim 1, wherein the couplings are freewheel couplings (26, 28) acting in opposite directions.

3. Pumping device (20) according to Claim 1 or 2, wherein a metering module (18) of the exhaust gas aftertreatment system (10) is connected to a discharge line (34) of the second pump (24) and to a suction line (38) of the first pump (22) by means of a shuttle valve (36).

4. Pumping device (20) according to one of Claims 1 to 3, wherein a suction line (40) of the second pump (24) and a discharge line (42) of the first pump (22) are connected to a storage tank (12) for the reductant (14).

5. Pumping device (20) according to one of Claims 1 to 4, wherein the pumps (22, 24) are preferably diaphragm pumps.

6. Pumping device (20) according to one of Claims 1 to 5, wherein the motor (32) is preferably an electric motor, in particular an external rotor motor.

7. Pumping device (20) according to one of Claims 1 to 6, wherein at least one return flow restrictor (50, 116) is provided.

8. Pumping device (20) according to Claim 7, wherein the return flow restrictor (50) is arranged between the second pump (24) and the shuttle valve (36) and is connected to the storage tank (12) by a return flow line (52).

9. Pumping device (20) according to Claim 7, wherein the return flow restrictor (116) is integrated into the shuttle valve (36) and is connected to the storage tank (12).

10. Method for operating a pumping device, in particular a pumping device (20) according to one of Claims 1 to 9, for supplying an exhaust gas aftertreatment system (10) of an internal combustion engine with a reductant (14), in particular with an aqueous urea solution, in order to reduce nitrogen oxides in the exhaust gas flow of the internal combustion engine, having a motor (32) for driving two pumps (22, 24), **characterized in that** a switch is made between a delivery state and a suck-back state by reversing the direction of rotation of the motor (32), wherein, in the delivery state, the reductant (14) is pumped out of a storage tank (12) for the reductant (14), via a shuttle valve (36), as far as a metering module (18) by means of the second pump (24) and, in the suck-back state, the reductant (14) is sucked back out of the metering module (18), via the shuttle valve (36), into the storage tank (12) by means of the first pump (22).

## Revendications

1. Dispositif de refoulement (20) pour alimenter un système de traitement secondaire des gaz d'échappement (10) d'un moteur à combustion interne en un agent réducteur (14), en particulier en une solution aqueuse d'urée, pour la réduction d'oxydes d'azote dans le flux des gaz d'échappement du moteur à combustion interne, comprenant un moteur (32) pour l'entraînement de deux pompes (22, 24), **caractérisé en ce que** la première pompe (22) est reliée au moteur par le biais d'un premier accouplement et la deuxième pompe (24) est reliée au moteur par le biais d'un deuxième accouplement.

2. Dispositif de refoulement (20) selon la revendication 1, dans lequel les accouplements sont des accouplements à roue libre (26, 28) agissant de manière contrarotative.

3. Dispositif de refoulement (20) selon la revendication 1 ou 2, dans lequel un module de dosage (18) du système de traitement secondaire des gaz d'échappement (10) est relié, par le biais d'un sélecteur de circuit (36), à une conduite de refoulement (34) de la deuxième pompe (24) et à une conduite d'aspiration (38) de la première pompe (22).

4. Dispositif de refoulement (20) selon l'une quelconque des revendications 1 à 3, dans lequel une conduite d'aspiration (40) de la deuxième pompe (24) et une conduite de refoulement (42) de la première pompe (22) sont reliées à un réservoir de stockage (12) pour l'agent réducteur (14).

5. Dispositif de refoulement (20) selon l'une quelconque des revendications 1 à 4, dans lequel les pompes (22, 24) sont de préférence des pompes à membrane.

6. Dispositif de refoulement (20) selon l'une quelconque des revendications 1 à 5, dans lequel le moteur (32) est de préférence un moteur électrique, en particulier un moteur à rotor extérieur.

7. Dispositif de refoulement (20) selon l'une quelconque des revendications 1 à 6, dans lequel au moins un étranglement de retour (50, 116) est prévu.

8. Dispositif de refoulement (20) selon la revendication 7, dans lequel l'étranglement de retour (50) est disposé entre la deuxième pompe (24) et le sélecteur de circuit (36) et est relié au réservoir de stockage (12) par le biais d'une conduite de retour (52).

9. Dispositif de refoulement (20) selon la revendication 7, dans lequel l'étranglement de retour (116) est intégré dans le sélecteur de circuit (36) et est en liaison avec le réservoir de stockage (12).

10. Procédé pour faire fonctionner un dispositif de refoulement, en particulier un dispositif de refoulement (20) selon l'une quelconque des revendications 1 à 9, pour alimenter un système de traitement secondaire des gaz d'échappement (10) d'un moteur à combustion interne en un agent réducteur (14), en particulier en une solution aqueuse d'urée, pour la réduction d'oxydes d'azote dans le flux des gaz d'échappement du moteur à combustion interne, comprenant un moteur (32) pour l'entraînement de deux pompes (22, 24), **caractérisé en ce que**, par inversion du sens de rotation du moteur (32), on commute entre un état de refoulement et un état de ré-aspiration, l'agent réducteur (14) étant, dans l'état de refoulement, refoulé au moyen de la deuxième pompe (24) à partir d'un réservoir de stockage (12) pour l'agent réducteur (14), par le biais d'un sélecteur de circuit (36), jusqu'à un module de dosage (18) et l'agent réducteur (14) étant, dans l'état de ré-aspiration, ré-aspiré dans le réservoir de stockage (12) au moyen de la première pompe (22), à partir du module de dosage (18), par le biais du sélecteur de circuit (36).
